Europäisches Patentamt

European Patent Office

Office européen des brevets

(19)

(11) Veröffentlichungsnummer: **0 393 803**

**A1**

(12) **EUROPÄISCHE PATENTANMELDUNG**

(21) Anmeldenummer: 90250097.4

(22) Anmeldetag: 12.04.90

(51) Int. Cl.⁵: **F16L 55/165, F16L 1/08**

(30) Priorität: 15.04.89 DE 3912728

(43) Veröffentlichungstag der Anmeldung:
24.10.90 Patentblatt 90/43

(84) Benannte Vertragsstaaten:
AT BE CH DE FR GB IT LI LU NL SE

(71) Anmelder: **GUSTAV GILDEMEISTER GMBH**
**Granatenstrasse 29-32**
**D-1000 Berlin 51(DE)**

(72) Erfinder: **Hölterhoff, Jens, Dipl.-Berging**
**Kaiserdamm 11**
**D-1000 Berlin 19(DE)**

(74) Vertreter: **Wablat, Wolfgang, Dr.Dr.**
**Potsdamer Chaussee 48**
**D-1000 Berlin 38(DE)**

(54) Verfahren und Vorrichtung zum Auswechseln im Erdreich verlegter Rohrleitungen.

(57) Bei einem Verfahren und einer Vorrichtung zum Auswechseln im Erdreich verlegter Rohrleitungen werden im Bereich zwischen einer Einziehbaugrube (3) und einer Zielbaugrube (4) ein altes Rohr (1) entfernt und an dessen Stelle ein neues Rohr (2) eingezogen, indem das alte Rohr zur Zielbaugrube hingezogen und in dieser zerkleinert wird und das neue Rohr dem alten folgend aus der Einziehbaugrube (3) mittels einer gemeinsamen Zieheinrichtung (5) für das alte und das neue Rohr zur Zielbaugrube gezogen wird. Dabei dient als Zieheinrichtung ein am Ende des alten Rohres durch dieses hindurchgeführtes, am Rohrende befestigtes Stahlseil (7), welches kontinuierlich mittels einer hydraulisch angetriebenen Seilscheibe oder Seiltrommel in die Zielbaugrube gezogen und dort aufgewickelt wird, wobei das neue Rohr in der Einziehbaugrube mit dem alten Rohr zur Kraftübertragung formschlüssig gekoppelt wird, um stetig nachgezogen zu werden.

# FIG.1

EP 0 393 803 A1

## Verfahren und Vorrichtung zum Auswechseln im Erdreich verlegter Rohrleitungen

Die Erfindung betrifft ein Verfahren und eine Vorrichtung zum Auswechseln im Erdreich verlegter Rohrleitungen.

Bisher war es üblich, im Erdreich verlegte Rohre mittels hydraulisch arbeitender Ziehvorrichtungen mit relativ kurzem Zylinderhub von etwa 0,5 m zu entfernen, wie dies z. B. aus dem deutschen Gebrauchsmuster DE-U1 87 14 724 bekannt geworden ist. Hierbei wurde die Zugkraft über Rohrschellen, Klemmbacken, Klemmböcke und dgl. entweder direkt auf das Rohr oder aber über Zugstangen durch das auszubauende Rohr hindurch mittels einer formschlüssig am freien Ende der einzuziehenden neuen Rohre befestigten Ankerplatte, welche dem alten Rohr folgend bis zur Zielbaugrube gezogen wurde, eingebracht.

Die Zugstangen und damit der gesamte Rohrstrang bzw. die Klemmkonstruktion wurden um einen relativ kurzen Zylinderhub zur Zielbaugrube hin bewegt und, nachdem der herausgezogene alte Rohrabschnitt zerstört oder abgetrennt war, durch das Einfahren der Zylinder wieder zurückbewegt. Die zur Kraftübertragung notwendige Ankerplatte bzw. Klemmkonstruktion mußte nun gelöst und erneut am bereits um einen Zylinderhub nachgezogenen Rohr fixiert werden.

Diese Konstruktion hat den großen Nachteil, daß aufgrund der diskontinuierlichen Bewegung mit anschließendem Umbaustillstand stark wechselnde Zugkräfte eingebracht werden müssen. Jeweils zu Beginn des Zugvorganges muß die Kraft äußerst hoch sein, während sie sich gegen Ende vermindert.

Es ist daher Aufgabe der Erfindung, aus wirtschaftlichen und verfahrenstechnischen Gründen ein Verfahren und eine Vorrich tung zu schaffen, das bzw. die den Umbaustillstand minimiert oder einen Umbau unnötig macht, so daß man, abgesehen von der hohen Anfangskraft für den Lösevorgang, mit relativ geringen Kräften für das eigentliche Herausziehen auskommt.

Diese Aufgabe wird erfindungsgemäß durch das im Hauptanspruch angegebene Verfahren und durch die im Patentanspruch 2 angegebene Vorrichtung zur Durchführung des Verfahrens gelöst. Auf diese Weise gelingt es, in einem einzigen Ziehvorgang Rohrlängen bis zu etwa 75 m zu bewältigen, ohne daß ein Umsetzen oder eine Unterbrechung des Rohrwechsels erforderlich werden.

Mit konventionellen Hydraulikzylindern ist es schwierig, wechselnd starke Kräfte zu erzeugen bzw. unmöglich, ein kontinuierliches Herausziehen zu gewährleisten. Konventionelle Winden sind nicht in der Lage, die hohen zum Lösen notwendigen Kräfte zu erbringen. Die Erfindung arbeitet daher mit einem über mehrere Hydraulikmotoren bzw. über einen an ein Getriebe gekoppelten Hydraulikmotor kontinuierlich angetriebenen Antriebsrad, wobei die notwendigen Zugkräfte entweder über Stahlpreßklemmen oder durch eine Seiltrommel auf ein Stahlseil übertragen werden. Die Hydraulikmotoren können über einen Steuerblock wahlweise ein- und ausgeschaltet werden, wodurch sich unterschiedlich starke Antriebskräfte erzeugen lassen.

Weitere Ausgestaltungen der Erfindung sind in den Unteransprüchen angegeben.

Die Erfindung wird nachstehend anhand eines in der Zeichnung dargestellten Ausführungsbeispiels des Erfindungsgegenstan des näher erläutert. Es zeigen:

Fig.1 eine schematische Prinzipskizze für die Anwendung des Verfahrens,

Fig.2 eine Seitenansicht des Antriebsrades in der Zielbaugrube,

Fig.3 eine Vorderansicht von Fig. 2,

Fig.4 eine vergrößerte Seitenansicht des Antribesrades mit Zugseil,

Fig.5 eine Rückansicht von Fig. 4,

Fig.6 eine Einzelheit vom Fig.4 entsprechend der Schnittlinie VI - VI,

Fig.7 eine Abwandlung der Kraftübertragung zwischen Antriebsrad und Zugseil,

Fig.8 einen Systemverbau zur Fixierung des Antriebsrades in der Zielbaugrube,

Fig.9 eine Anordnung zur Kraftübertragung zwischen dem alten Rohr, dem Zugseil und dem neuen Rohr, und

Fig.10 Einzelheiten von Fig. 9.

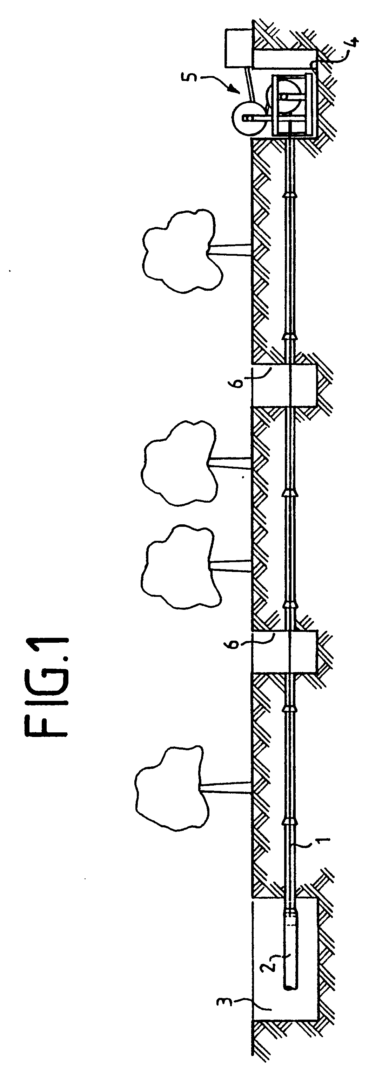

In Fig.1 soll ein altes Gasdruckrohr 1 durch eine neues Rohr 2 ersetzt werden. Die alten Gasdruckrohre bestehen im allgemeinen aus Gußeisen, haben größtenteils einen Durch-Durchmesser von etwa 80 mm und mehr, sind etwa 6 m lang und bis zu 80 Jahre alt. Die neuen Rohre bestehen aus Hart-Polyethylen, haben einen etwas größeren Durchmesser, sind auf Trommeln in beliebiger Länge aufgewickelt und haben eine Lebensdauer von etwa 50 Jahren. Diese Trommeln befinden sich bei einer Einziehbaugrube 3, während in einer Zielbaugrube 4 eine hydraulisch arbeitende Ziehvorrichtung 5 untergebracht ist. Weitere kleinere Baugruben 6 befinden sich dazwischen für das Lösen bzw. Anbringen der Hausanschlüsse. Auf diese Weise können in einem stetigen Arbeitsgang etwa 75 m Rohr ersetzt werden, wobei das alte Rohr in der Zielbaugrube laufend zerkleinert und entfernt wird.

Die in der Zeichnung dargestellte Ziehvorrichtung 5 arbeitet mit einem Zugseil 7, das in der Einziehbaugrube 3 sowohl mit dem alten Rohr 1 als auch mit dem neuen Rohr 2 gekoppelt ist, wobei beim Ziehvorgang das alte Rohr 1 gedrückt und das neue Rohr 2 nachgezogen wird.

Die zum Lösen des alten Rohres 1 benötigte Zugkraft beträgt etwa 60 t.

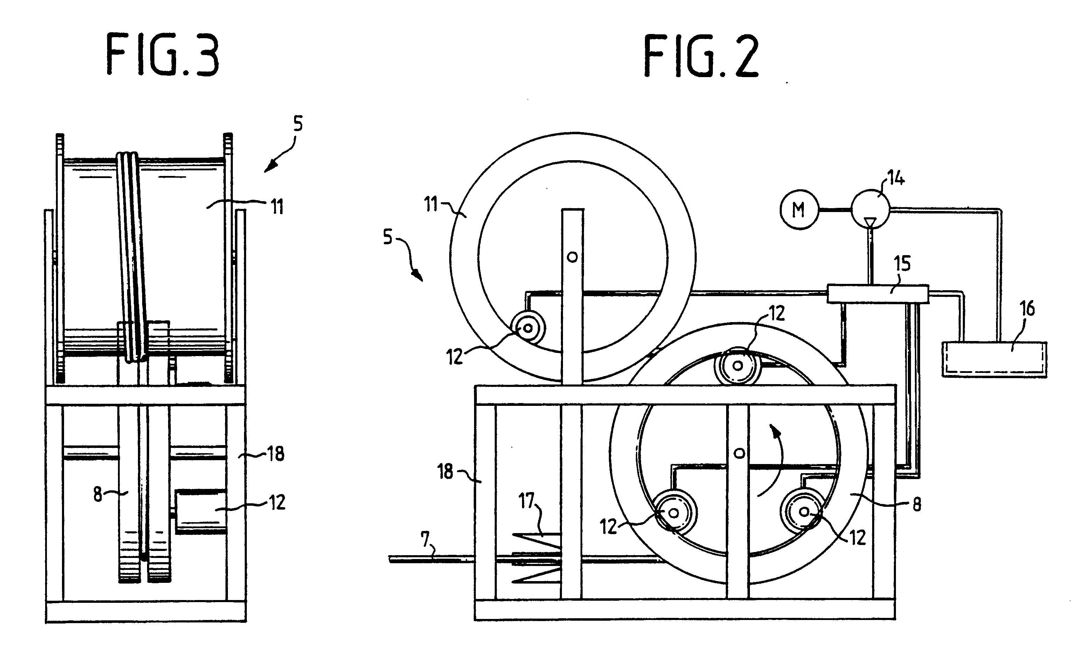

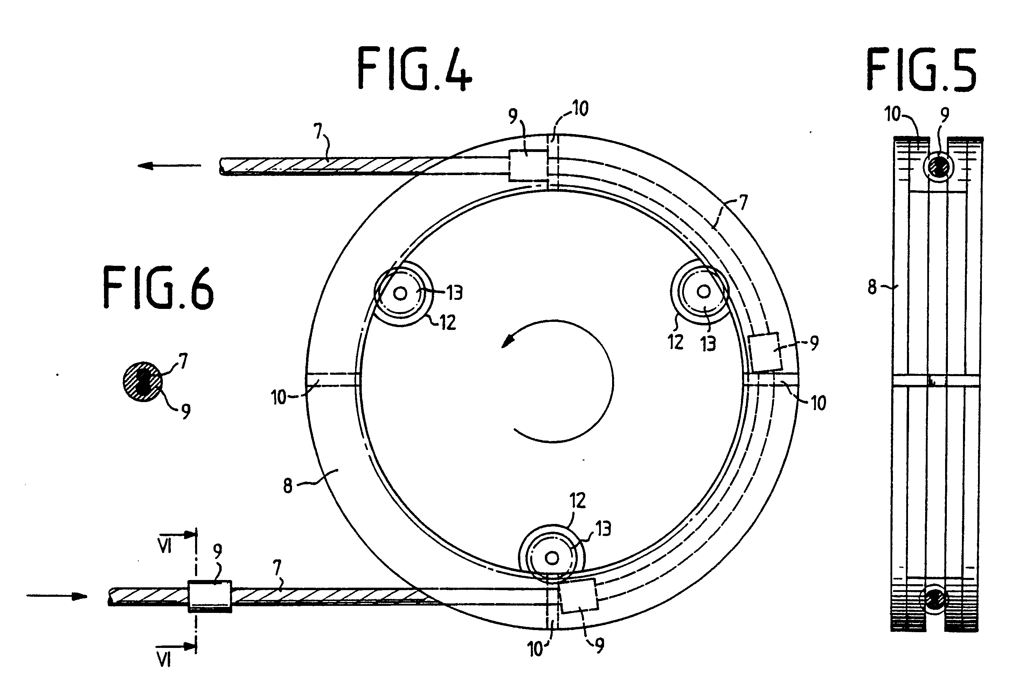

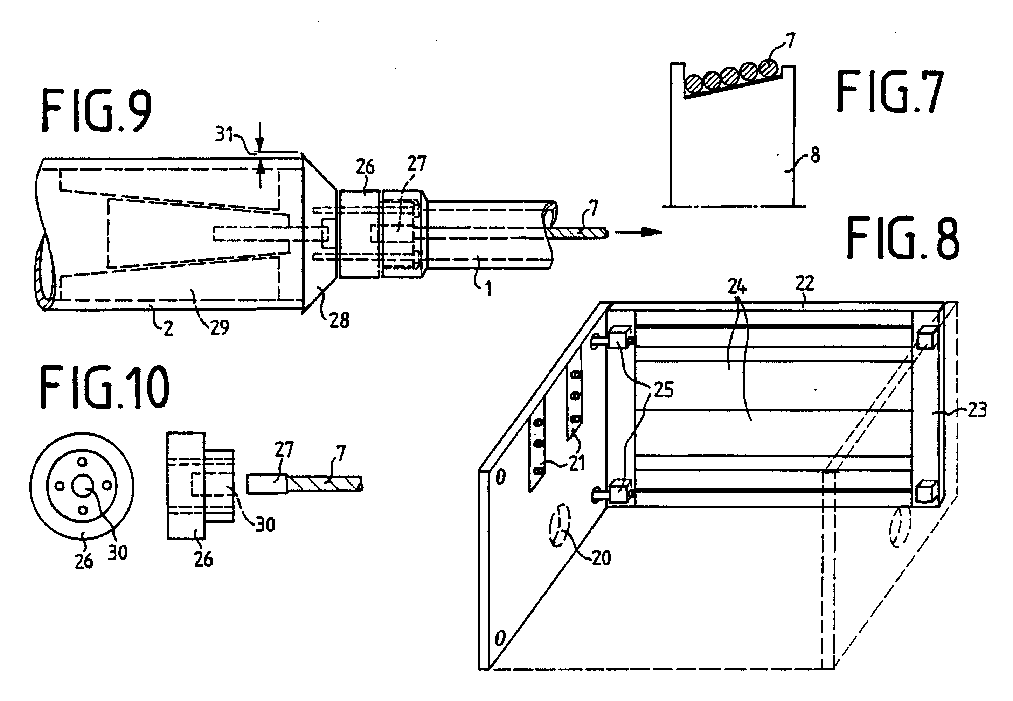

Um diese große Last übertragen zu können, bedarf es besonderer Vorkehrungen. Das Zugseil 7 kann z. B. wie bei einem Spill mehrmals das Antriebsrad 8 umschlingen (Fig. 7). Man kann aber auch das Seil 7 mit Stahlpreßklemmen 9 versehen und am Antriebsrad 8 entsprechend ausgebildete Mitnehmerplatten 10 vorsehen. Das Seil wird dann reibungslos mitgenommen und kann anschließend auf eine Seiltrommel 11 aufgewickelt werden, wie in Fig. 2 und 3 bzw. 4,5 und 6 zu sehen ist. Das Zugseil 7 ist als Doppelseil ausgebildet (Fig.6), wobei die Seilklemme natürlich einen kleineren Durchmesser als das alte Rohr 1 haben muß.

Eine andere in der Zeichnung im einzelnen nicht dargestellte Abwandlung besteht darin, die Seiltrommel 11 als unmittelbaren Antrieb auszugestalten, indem diese mit Hydraulikmotoren 12 und Antriebszahnrädern 13 versehen wird. Auf diese Weise wird die gesamte Kraft über die Seiltrommel, wo das Seilende fixiert ist, auf das Zugseil 7 übertragen, so daß dann das Antriebsrad 8 lediglich die Funktion einer Umleitrolle hätte, wobei Seilpressklemmen 9 und Mitnehmerplatten 10 überflüssig werden. Ein Vorteil der Seiltrommel ist ein anfangs hohes Moment bei geringer Geschwindigkeit, dann bei mehreren Umwicklungen und damit größerem Durchmesser ein kleineres Moment bei großerer Geschwindigkeit.

Der Antrieb erfolgt mittels Hydraulikmotoren 12 und Antriebszahnrädern 13. Eine Hydraulikpumpe 14, ein Hydrauliksteuerblock 15 und ein Hydrauliköltank 16 sind in Fig.2 ange deutet. Vor dem Auflaufen des Zugseils 7 auf das Antriebsrad 8 zerkleinert ein Schneidtrichter 17 laufend das herausgedrückte alte Rohr 1 in der Zielbaugrube 4.

Ein Maschinenrahmen 18 dient zur Verankerung der gesamten Ziehvorrichtung 5 in der Zielbaugrube 4. Wie aus Fig.8 hervorgeht, ist für die Aufnahme der Ziehvorrichtung 5 ein besonderer Systemverbau entwickelt worden, um die Ziehvorrichtung 5 derart zu fixieren, daß sämtliche Maßnahmen ins Erdreich abgeleitet werden können.

Die Stirnwände des Systemverbaus sind als Stahlwiderlagerplatten 19 mit jeweils einer Rohröffnung 20 für das auszubauende alte Rohr 1 und einer Aufnahme 2 für den Maschinenrahmen 18, ausgebildet. Der seitliche Verbau besteht aus einem Stahlrahmen 22 aus senkrechten U-Eisen 23 mit waagerechten Holzbohlen 24 und je 4 Stück Gewindehülsen 25 mit Feststellstangen, um ein optimales Anliegen der Widerlagerplatten 19 am anstehenden Boden und damit ein ideales Einleiten der Kräfte zu gewährleisten.

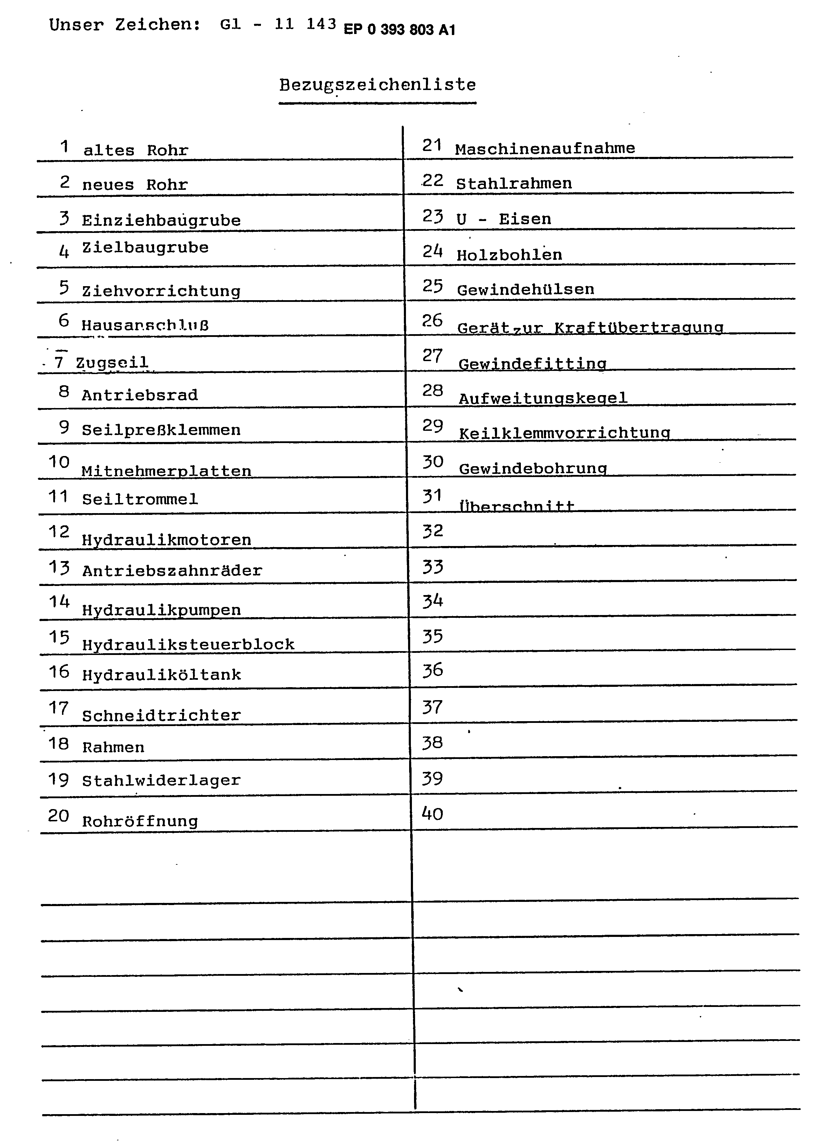

Von wesentlicher Bedeutung für die Erfindung ist neben der Ausbildung der Ziehvorrichtung 5 eine gemeinsame Zieheinrichtung für das alte Rohr 1 und das neue Rohr 2, um die für das Lösen der alten Rohre 1 aufzuwendende Kraft von etwa 60 t zuverlässig zu übertragen. Hierzu ist ein Ausführungsbeispiel in Fig. 9 und 10 dargestellt.

Das Zugseil 7 wird vor dem eigentlichen Ziehvorgang durch das herauszuziehende Rohr 1 geführt und am Schwanzende mit einem speziellen Gerät 26 zur Kraftübertragung und zum gleichzeitigen Nachziehen eines neuen Rohres 2 gekoppelt. Das Gerät 26 zur Kraftübertragung sitzt formschlüssig im herauszuziehenden alten Rohr 1, wobei die Kraftübertragung über ein auf das Zugseil 7 aufgepreßtes Gewindefitting 27 erfolgt. In Abhängigkeit von der Nennweite des nachzu -ziehenden Rohres 2 können verschiedene Aufweitungskegel 28 angeschraubt werden, wie dies in Fig. 9 und 10 durch zwei Bohrungen und Schrauben angedeutet ist. Das Kopfende des nachzuziehenden Rohres wird mit einer Keilklemmvorrichtung 29 fixiert, deren Zentralkonus seinerseits mit dem Aufweitungskegel 28 verschraubt ist. Das Gewindefitting 27 des Zugseils 7 ist dabei in einer Gewindebohrung 30 des Gerats 26 fest ver -schraubt.

Während des Zugvorganges wird das vorzugsweise aus Gußeisen bestehende Rohr 1 vor dem Antriebsrad 8 in einem Schneidtrichter 17 kontinuierlich gebrochen. Die sich in Zugrichtung verjüngenden Schneidmesser bewirken relativ kleine Bruchstücke, die über eine Rutsche auf einen Stetigförderer fallen und aus der Zielbaugrube 4 hinaus in einen Sammel behälter gefördert werden. Das vom Antriebsrad 8 ablaufende Zugseil 7 wird auf einer unter geringer Vorspannung stehenden Seiltrommel 11 aufgewickelt.

Die größte Zugkraft von 60 t erfordert das Lösen der teilweise bis zu 80 Jahren im Erdreich fest eingebetteten alten Rohre 1. Sobald dieses Lösen bewerkstelligt ist, vermindern sich die aufzuwendenden Kräfte beträchtlich. Daher sind am Antriebsrad 8 mehrere Hydraulikmotoren 14 vorgesehen, die aber nur im Anfangsstadium benötigt werden, da infolge des kontinuierlichen Ziehvorgangs erheblich geringere Kräfte benötigt werden, so daß über den Hydrauliksteuerblock 15 alsbald einzelne der Hydraulikmotoren abgeschaltet werden können. Alternativ dazu kann auch ein Getriebe mit nur einem Hydraulikmotor eingesetzt werden.

Da die neuen Rohre 2 wegen der steigenden Mengenanforderungen einen größeren Durchmesser haben als die alten Rohre 1, ist der Aufweitungskegel 28 zwischen beiden angeordnet, der meistens einen Winkel von 30 ° aufweist. Um die Mantelreibung des neuen Rohres 2 zu vermindern, ist der Aufweitungskegel 28 gegenüber dem Außendurchmesser des neuen Rohres 2 mit einem Überschnitt 31 dimensioniert.

Verfahren und Vorrichtung gemäß der vorliegenden Erfindung eignen sich im Prinzip auch dazu, duktile Gußrohre als neues Rohrmaterial nachzuziehen. Allerdings beträgt die Lange des kontinuierlichen Zugvorgangs dann nur etwa 6 m, aber auch das ware schon ein entscheidender Vorteil gegenüber den herkömmlichen Verfahren. Dabei sollte das nachzuziehende neue Rohr ebenso "gedrückt" werden wie das alte Rohr, da zugfeste Verbindungen bei duktilen Gußrohren schwierig sind. Für Nachziehen ("drücken") empfiehlt sich eine am Aufweitungskegel (28) fixierte Kette, welche durch das neue Rohr hindurchgeführt und am Ende unter Spannung befestigt wird.

## Ansprüche

1. Verfahren zum Auswechseln im Erdreich verlegter Rohrleitungen, wobei im Bereich zwischen einer Einzieh -baugrube und einer Zielbaugrube ein altes Rohr entfernt und an dessen Stelle ein neues Rohr eingezogen werden, indem das alte Rohr zur Zielbaugrube hingezogen und in dieser zerkleinert wird und das neue Rohr dem alten folgend aus der Einziehbaugrube mittels einer gemeinsamen Zieheinrichtung für das alte und das neue Rohr zur Zielbaugrube gezogen wird, **dadurch gekennzeichnet**, daß als Zieheinrichtung ein am Ende des alten Rohres durch dieses hindurchgeführtes, am Rohrende befestigtes Stahlseil dient, welches kontinuierlich mittels einer hydraulisch angetriebenen Seilscheibe oder Seiltrommel in die Zielbaugrube gezogen und dort aufgewickelt wird, wobei das neue Rohr in der Einziehbaugrube mit dem alten Rohr zur Kraftübertragung formschlüssig gekoppelt wird, um stetig nachgezogen zu werden.

2. Vorrichtung zur Durchführung des Verfahrens nach An spruch 1, **gekennzeichnet durch**

a) ein mittels Hydraulikmotoren (12) angetriebenes Antriebsrad (8) oder eine Seiltrommel (11) für ein Zugseil (7);

b) ein Gerät (26) zur Kraftübertragung zwischen dem Schwanzende des alten Rohres (1) und dem Kopfende des neuen Rohrs (2).

3. Vorrichtung nach Anspruch 2, **dadurch gekennzeichnet**, daß das in der Zielbaugrube (4) eingebaute Antriebsrad (8) mit Mitnehmerplatten (10) für auf dem Zugseil (7) angebrachte Seilpressklemmen (9) versehen ist.

4. Vorrichtung nach Anspruch 2, **dadurch gekennzeichnet**, daß ein Ende des Zugseils (7) an der als Antrieb dienenden Seiltrommel (11) befestigt ist.

5. Vorrichtung nach einem der Ansprüche 2 bis 4, **dadurch gekennzeichnet**, daß der oder die Hydraulikmotoren (12) über Antriebszahnräder (13) mit dem Antriebsrad (8) oder mit der Seiltrommel (11) verbunden und mittels eines Hydrauliksteuerblocks (15) je nach Kraftbedarf zu- und abschaltbar sind.

6. Vorrichtung nach einem der Ansprüche 2 bis 5, **dadurch gekennzeichnet**, daß das alte Rohr (1) in der Zielbaugrube (4) von dem Auflaufen des Zugseils (7) auf die Antriebstrommel mittels eines Schneidtrichters (17) zerkleinert und das ablaufende Seilende auf einer Seiltrommel (11) aufgewickelt werden.

7. Vorrichtung nach Anspruch 2, **dadurch gekennzeichnet**, daß das Gerät (26) zur Kraftübertragung aus einem mit dem Zugseil fest verbundenen Ge -windefitting (27), einem mit entsprechender Gewinde -bohrung (30) versehenen formschlüssig im Schwanzende des alten Rohres (1) angeordneten Formteil, einem mit diesem verschraubten Aufweitungskegel (28) und einer im Kopfende des neuen Rohres (2) angeordneten Keilklemmvorrichtung (29) besteht, deren Zentralkonus mit dem Aufweitungskegel (28) verschraubt ist.

8. Vorrichtung nach Anspruch 7, **dadurch gekennzeichnet**, daß ein Überschnitt (31) des Aufweitungskegels (28) gegenüber dem Außendurchmesser des neuen Rohres (2) vorgesehen ist.

9. Vorrichtung nach einem der Ansprüche 2 bis 8, **dadurch gekennzeichnet**, daß das Antriebsrad (8), die Seiltrommel (11) und der Schneidtrichter (17) einen gemeinsamen Maschinenrahmen (18) aufweisen, der in der Zielbaugrube (4) unverrückbar eingebaut ist.

10. Vorrichtung nach Anspruch 9, **dadurch gekennzeichnet**, daß Stahlwiderlagenplatten (19) mit einer Rohröffnung (20) die Stirnwände bilden, die eine Aufnahme (21) für den Maschinenrahmen (18) aufweisen, wobei für den seitlichen Verbau Stahlrahmen (22) mit waagerechten Holzbohlen (24) und Gewindehülsen (25) mit Feststellstangen vorgesehen sind.

# FIG.1

EP 0 393 803 A1

**FIG.2**

**FIG.3**

# FIG.4

# FIG.5

# FIG.6

EP 0 393 803 A1

FIG.9

FIG.7

FIG.8

FIG.10

EP 0 393 803 A1

## Bezugszeichenliste

| | | | |
|---|---|---|---|
| 1 | altes Rohr | 21 | Maschinenaufnahme |
| 2 | neues Rohr | 22 | Stahlrahmen |
| 3 | Einziehbaugrube | 23 | U - Eisen |
| 4 | Zielbaugrube | 24 | Holzbohlen |
| 5 | Ziehvorrichtung | 25 | Gewindehülsen |
| 6 | Hausanschluß | 26 | Gerät zur Kraftübertragung |
| 7 | Zugseil | 27 | Gewindefitting |
| 8 | Antriebsrad | 28 | Aufweitungskegel |
| 9 | Seilpreßklemmen | 29 | Keilklemmvorrichtung |
| 10 | Mitnehmerplatten | 30 | Gewindebohrung |
| 11 | Seiltrommel | 31 | Überschnitt |
| 12 | Hydraulikmotoren | 32 | |
| 13 | Antriebszahnräder | 33 | |
| 14 | Hydraulikpumpen | 34 | |
| 15 | Hydrauliksteuerblock | 35 | |
| 16 | Hydrauliköltank | 36 | |
| 17 | Schneidtrichter | 37 | |
| 18 | Rahmen | 38 | |
| 19 | Stahlwiderlager | 39 | |
| 20 | Rohröffnung | 40 | |

**Europäisches Patentamt**

# EUROPÄISCHER RECHERCHENBERICHT

Nummer der Anmeldung

EP 90 25 0097

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-2297164 (J.E.RAINWATER) <br> * Seite 1, Spalte 2, Zeile 25; Ansprüche ; Figuren * <br> --- | 1, 4, 7, 8 | F16L55/165 <br> F16L1/08 |
| A | US-A-4637756 (BOLES) <br> * Zusammenfassung; Figuren * <br> --- | 1, 7, 8 | |
| A,D | DE-U-8714724 (KARL WEISS GMBH & CO) <br> --- | | |
| A | US-A-3181302 (W.R.LINDSAY) <br> --- | | |
| A | DE-U-8807589 (BERLINER WASSER-BETRIEBE) <br> ----- | | |

| | RECHERCHIERTE SACHGEBIETE (Int. Cl.5 ) |
|---|---|
| | F16L |

Der vorliegende Recherchenbericht wurde für alle Patentansprüche erstellt

| Recherchenort | Abschlußdatum der Recherche | Prüfer |
|---|---|---|
| DEN HAAG | 20 JULI 1990 | BARTSCH A.W. |